# EUROPEAN PATENT SPECIFICATION

(11) **EP 1 446 017 B1**
(45) Date of publication and mention of the grant of the patent: **28.02.2007**
(21) Application number: 02798803.9
(22) Date of filing: 17.09.2002
(51) Int. Cl.: A22C 13/00, A22C 11/00

(54) **METHOD AND APPARATUS FOR THE SUPERFICIAL CONDITIONING FOOD EXTRUSIONS**
VERFAHREN UND GERÄT ZUR OBERFLÄCHENBEHANDLUNG VON NAHRUNGSMITTELEXTRUSIONEN
PROCEDE ET DISPOSITIF DE TRAITEMENT SUPERFICIEL DE PRODUITS ALIMENTAIRES EXTRUDES

(30) Priority: 18.09.2001 IT RM20010566
(43) Date of publication of application: 18.08.2004
(73) Proprietor: REFIN S.r.l., 36100 Vicenza (IT); Rex Food Technologies, Newlands 7700 (ZA)
(72) Inventor: RIGHELE, Giovanni, Battista, I-36010 Zane' (IT); MELNYCZUK, Mikhailo, Stellenbosch 7599 (ZA)
(74) Representative: Leone, Mario
(86) International application number: PCT/IT2002/000590
(87) International publication number: WO 2003/024234

(56) References cited:
- GB-A- 784 235
- GB-A- 1 198 498
- US-A- 5 611 263

## Description

The present invention refers to a method and to an apparatus for the superficial conditioning of food extrusions, in particular meat-base extrusions in form of sausages, frankfurters and the like.

There are several known systems for conditioning the surface of said extrusions, in order to manufacture sausage-shaped uncased extrusions, ready to be packaged, e.g. in tubs or in vacuum packages, and then directly consumed.

The methods most widely resorted to foresee the employ of vats containing a bath with collagenic substances. The extrusions, expelled from the machine compacting them in a cylinder-shaped and elongated shape, are passed through said bath and subsequently dried prior to packaging.

This type of systems is unsatisfactory in several respects. In fact, the vats fill up a considerable space, which is detrimental to the compactness of the extrusion apparatus, and are apt to gather environmental pollution, due to the extrusions and to any agent external to the apparatus. This compels the emptying of the vats, and the filling thereof, with the entailed break in the production run and the poor efficiency in the employ of the fluids stabilizing the surface of the food extrusions at issue.

An exemplary process of the state of the art is taught by International Appln. WO 01/41576.

Moreover, it should be pointed out that the animal origin of the collagenic substances might make consumers feel insecure.

The technical problem underlying the present invention is to provide a method and an apparatus overcoming the drawbacks mentioned with reference to the known art.

This problem is solved by a method for the superficial conditioning of food extrusions, characterized in that it comprises the steps of:
* introducing a food extrusion in a conditioning duct for the superficial stabilizing of the extrusion;
* in a first section of said duct, spraying the surface of the food extrusion with a stabilizer in form of gel; and
* in a second section of said duct, spraying the surface of the food extrusion with a catalyst of said stabilizer.

Hereinafter, for stabilizer it is meant a substance capable of forming, onto the surface of the extrusion, a film compatible with food consumption, such as to provide sturdiness and strength to the surface and to the extrusion.

In a preferred embodiment of said method, the stabilizer comprises sodium alginate, carrageen, Xanthan gum, suitably mixed and optionally water-diluted.

Spraying of the catalyst, that in a preferred embodiment of said method comprises calcium lactate, calcium chloride, lactic acid and optionally water-diluted mixtures thereof, accelerates the film-forming reaction. The main advantage of the method according to the present invention lies in conditioning and stabilizing the surface of the extrusion within very limited times and space, to then forward the extrusion to subsequent treatments and to packaging.

The invention further refers to an apparatus for the superficial conditioning of extrusions comprising a closed conditioning duct housing the extrusion, said conditioning duct being partitioned into a first section, fed by first superficial treatment means, and a second section, fed by second superficial treatment means.

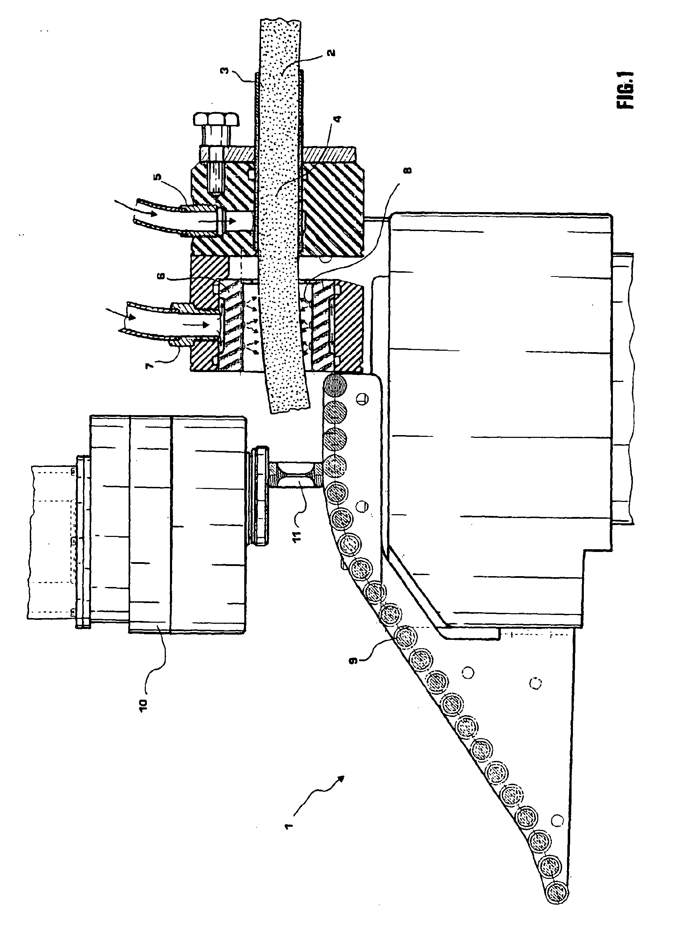

The present invention will hereinafter be disclosed according to a preferred embodiment thereof, given by way of a non-limiting example and with reference to the attached drawing, wherein Figure 1 is a schematic sectional view of an apparatus for the superficial conditioning of food extrusions according to the present invention, incorporated in a more complex extrusion apparatus.

With reference to Figure 1, an apparatus for the extruding of food extrusions is partially depicted and indicated with 1.

This type of apparatus is apt to produce extrusions, e.g., meat-base ones, outletted in form of a cylinder-shaped extrusion 2. This apparatus, not providing encasing, should comprise an apparatus for the superficial conditioning of the extrusion, in order to form a superficial stabilizing film onto the surface thereof.

The apparatus for the conditioning, it also partially depicted, comprises a closed conditioning duct 3 housing the extrusion 2 inletted from the extruding and free from any prior stabilization conditioning, merely optionally treated to aromatize the mixture of the extrusion 2.

The conditioning duct is partitioned into a first section 4, fed by first superficial treatment means 5, and a second section 6, fed by second superficial treatment means 7.

The first section 4 consists of a duct portion 3 inside which the extrusion flows, acquiring a section shape similar to the wall thereof.

Inside of this section 4 a stabilizer in form of gel is injected, in order to uniformly cover the surface to be stabilized. The injecting takes place by virtue of said first superficial treatment means 5 feeding said first section 4 with gel at adjustable flow rate and pressure.

A higher pressure and, therefore, a higher flow rate, concur in compacting the extrusion 2 and in thickening the gel layer that, at a subsequent stage, will be turned to film.

The second section 6 consists of a duct portion 3 into which the extrusion 2 flows with a remarkable clearance between the surface to be stabilized and the wall of the duct 3. Said second treatment means 7 comprises, located on said wall at the second section 6, a plurality of nozzles 8 pressure-fed with a catalyst in liquid form.

The geometry of the second section 6 enables the complete spraying of the surface of the extrusion 2.

With reference now to the method for the superficial conditioning, it comprises a step in which the extrusion 2 is introduced in said closed duct 3, in order to insert it in a restricted environment wherein the conditioning that will stabilize the surface of the extrusion 2 is to be carried out.

In said first section 4, the food extrusion 2 is sprayed with a stabilizer provided in form of gel that is capable to form, prior to the subsequent treatment, a sort of unstabilized film onto the surface thereof.

The shape and the thickness of said film are adjusted varying the passage section of the corresponding duct portion 3 and the feed pressure of the gel.

The stabilizer comprises sodium alginate, carrageen, Xanthan gum, optionally mixed and water-diluted. However, it is understood that the stabilizer may comprise equivalent surfactant substances.

However, these substances should be compatible with human consumption of food, i.e., meet the requirements of the standards on the matter. The same principle also applies to any further substance employed onto the surface of the extrusion.

The method comprises the subsequent step, located at the second section 6 of said duct 3, of spraying the surface of the food extrusion 2 with a catalyst of said stabilizer.

In this embodiment, the catalyst, provided in liquid form and sprayed and atomized onto the surface of the extrusion, comprises a mixture of calcium lactate, lactic acid, calcium chloride and optionally water-diluted mixtures thereof. However, it is understood that the catalyst may comprise equivalent surfactant substances.

Going back to the apparatus for the superficial conditioning, downstream of said section 6 it comprises a roller conveyor 9. Located at said conveyor 9 there may be, besides means for portioning the extrusion 10 in form of partitioning members 11, further equipments (not shown) for the subsequent superficial treatment of the extrusion 2.

Among said equipments, the following are mentioned:
* an equipment for the superficial rinsing of the extrusion, comprising a rinsing bath, optionally provided with bath agitating means, or with spraying means - the rinsing takes place with water;
* an equipment for the compacting of the extrusion with means uninjurious to the newly-conditioned surface of the extrusion, e.g. by ultrasounds; and
* an equipment for the superficial drying of the extrusion, operating with one or more forced flows of cold air.

It is understood that the latter two equipments may operate concomitantly.

Said equipments correspond to as many steps of further conditioning, superficial and not superficial, of the extrusion:
* a step of rinsing the surface of the extrusion by water immersing or spraying;
* a step of compacting the extrusion via the surface thereof, by ultrasound application; and
* a step of superficial drying of the extrusion by exposure to one or more cold air flows.

Subsequently to these steps, that usually ensue the portioning of the extrusion, the extrusion portions may be forwarded to further treatments, e.g., smoking, cooking, etc. or to packaging.

To the abovedescribed method and apparatus for the superficial conditioning of food extrusions a person skilled in the art, in order to meet further and contingent needs, may effect several further modifications and variants, all however encompassed by the protective scope of the present invention, as defined by the appended claims.

## Claims

1. A method for the superficial conditioning of food extrusions, **characterized in that** it comprises the steps of:
* introducing a food extrusion (2) in a conditioning duct (3) for the superficial stabilizing of the food extrusion (2);
* in a first section (4) of said duct (3), spraying the surface of the food extrusion (2) with a stabilizer in form of gel; and
* in a second section (6) of said duct (3), spraying the surface of the food extrusion (2) with a catalyst of said stabilizer.

2. The method according to claim 1, wherein said stabilizer comprises at least one of the following substances:
- sodium alginate;
- carrageen; and
- Xanthan gum
and, optionally, water-diluted mixtures thereof.

3. The method according to claim 1 or 2, wherein said catalyst comprises at least one of the following substances:
- calcium lactate;
- calcium chloride; and
- lactic acid;
and, optionally, water-diluted mixtures thereof.

4. The method according to any one of the preceding claims, comprising a step of rinsing the surface of the extrusion by water immersing or spraying.

5. The method according to any one of the preceding claims, comprising a step of compacting the extrusion via the surface thereof, by ultrasound application.

6. The method according to any one of the preceding claims, comprising a step of superficial drying of the extrusion by exposure to one or more cold airflows.

7. An apparatus for the superficial conditioning of extrusions comprising a closed conditioning duct (3) housing the food extrusion (2), said closed conditioning duct (3) being partitioned into a first section (4), comprising first superficial treatment means (5), and a second section (6), comprising second superficial treatment means (7).

8. The apparatus according to claim 7, wherein the first section (4) consists of a closed duct portion (3) inside which the food extrusion (2) flows with a minimum clearance between the surface to be stabilized and the wall of the closed duct (3).

9. The apparatus according to claim 8, wherein inside of the first section (4) a stabilizer in form of gel is injected, in order to uniformly cover the surface to be stabilized, the injecting taking place by virtue of said first superficial treatment means (5) feeding said first section (4) gel at adjustable flow rate and pressure.

10. The apparatus according to claim 7, wherein the second section (6) consists of a closed duct portion (3) inside which the food extrusion (2) flows with a remarkable clearance between the surface to be stabilized and the wall of the closed duct (3), said second treatment means (7) comprises a plurality of nozzles (8) located on said wall at the second section (6) and pressure-fed with a catalyst in liquid form.

11. The apparatus according to claim 7, comprising an equipment for the superficial rinsing of the extrusion, comprising a rinsing bath, optionally provided with bath agitating means, or with spraying means.

12. The apparatus according to claim 7, comprising an equipment for the compacting of the extrusion with means uninjurious to the surface of the newly conditioned extrusion, e.g. by ultrasounds.

13. The apparatus according to claim 8, comprising an equipment for the superficial drying of the extrusion, operating with one or more forced flows of cold air.

## Patentansprüche

1. Verfahren für die Oberflächenbehandlung von Nahrungsmittelextrusionen, **dadurch gekennzeichnet, dass** es die folgenden Schritte umfasst:
Einführen einer Nahrungsmittelextrusion (2) in eine Behandlungs-Rohrleitung (3) zur Oberflächenstabilisierung der Nahrungsmittelextrusion (2);
in einen ersten Abschnitt (4) der Rohrleitung (3) unter Besprühen der Oberfläche der Nahrungsmittelextrusion (2) mit einem Stabilisator in Form eines Gels; und
in einen zweiten Abschnitt (6) der Rohrleitung (3) unter Besprühen der Oberfläche der Nahrungsmittelextrusion (2) mit einem Katalysator für den Stabilisator.

2. Verfahren nach Anspruch 1, wobei der Stabilisator zumindest eine der folgenden Substanzen umfasst:
Natriumalginat;
Carrageen; und
Xanthangummi;
und optional in Wasser gelöste Mischungen davon.

3. Verfahren nach Anspruch 1 oder 2, wobei der Katalysator zumindest eine der folgenden Substanzen umfasst:
Kalziumlaktat;
Kalziumchlorid; und
Milchsäure;
und optional in Wasser gelöste Mischungen davon.

4. Verfahren nach irgendeinem der vorausgehenden Ansprüche, das einen Schritt des Spülens der Oberfläche der Extrusion mit Wasser durch Eintauchen oder Besprühen umfasst

5. Verfahren nach irgendeinem der vorausgehenden Ansprüche, das einen Schritt der Verdichtung der Extrusion über deren Oberfläche durch eine Ultraschallanwendung umfasst.

6. Verfahren nach irgendeinem der vorausgehenden Ansprüche, das einen Schritt der Oberflächentrocknung umfasst, bei der die Extrusion einer oder mehreren kalten Luftströmungen ausgesetzt wird.

7. Gerät zur Oberflächenbehandlung von Extrusionen, das eine geschlossene Behandlungs-Rohrleitung (3) umfasst, in welcher die Nahrungsmittelextrusion untergebracht ist, wobei die Behandlungs-Rohrleitung (3) unterteilt ist in einen ersten Abschnitt (4), welcher eine erste Oberflächenbehandlungseinrichtung (5) umfasst und in einen zweiten Abschnitt (6), welcher eine zweite Oberflächenbehandlungseinrichtung (7) umfasst.

8. Gerät nach Anspruch 7, wobei der erste Abschnitt (4) aus einem geschlossenen Rohrleitungsabschnitt (3) besteht, in dem die Nahrungsmittelextrusion (2) mit einem minimalen Spielraum zwischen der zu stabilisierenden Oberfläche und der Wand der geschlossenen Rohrleitung (3) fließt.

9. Gerät nach Anspruch 8, wobei im Inneren des ersten Abschnitts (4) ein Stabilisator in Form eines Gels eingespritzt wird, um die zu stabilisierende Oberfläche einheitlich zu bedecken und wobei das Einspritzen mittels der ersten Oberflächenbehandlungseinrichtung (5) stattfindet, welche dem ersten Abschnitt (4) ein Gel mit einer einstellbaren Flussrate und einem einstellbaren Druck zuführt

10. Gerät nach Anspruch 7, wobei der zweite Abschnitt (6) aus einem geschlossenen Rohrleitungsabschnitt (3) besteht, in dessen Innerem die Nahrungsmittelextrusion (2) mit einem beträchtlichen Freiraum zwischen der zu stabilisierenden Oberfläche und der Wand der geschlossenen Rohrleitung (3) fließt, wobei die zweite Behandlungseinrichtung (7) eine Vielzahl von Düsen (8) umfasst, die an der Wand bei dem zweiten Abschnitt (6) angebracht sind und mit einem Katalysator in flüssiger Form unter Druck gespeist werden.

11. Gerät nach Anspruch 7, das eine Apparatur zur Oberflächenspülung der Extrusion umfasst, welche ein Spülbad umfasst, das optional mit einer Badrührvorrichtung oder mit einer Sprühvorrichtung versehen ist.

12. Gerät nach Anspruch 7, das eine Apparatur zur Verdichtung der Extrusion mittels einer Einrichtung umfasst, welche die Oberfläche der frisch behandelten Extrusion nicht beschädigt, z.B. mit einer Ultraschalleinrichtung.

13. Gerät nach Anspruch 8, das eine Apparatur für die Oberflächentrocknung der Extrusion umfasst, die mit einer oder mehreren geführten Strömungen kalter Luft arbeitet.

## Revendications

1. Procédé pour le conditionnement superficiel d'extrusion d'aliment, **caractérisé en ce qu'**il comporte les étapes consistant à :
* introduire une extrusion d'aliment (2) dans un conduit de conditionnement (3) pour la stabilisation superficielle de l'extrusion d'aliment (2),
* dans un premier tronçon (4) dudit conduit (3), pulvériser la surface de l'extrusion d'aliment (2) avec un stabilisateur sous forme de gel, et
* dans un second tronçon (6) dudit conduit (3), pulvériser la surface de l'extrusion d'aliment (2) avec un catalyseur dudit stabilisateur.

2. Procédé selon la revendication 1, dans lequel ledit stabilisateur comporte au moins une des substances suivantes :
- de l'alginate de sodium,
- du chondrus, et
- de la gomme de xanthane,
et facultativement des mélanges dilués dans de l'eau de celles-ci.

3. Procédé selon la revendication 1 ou 2, dans lequel ledit catalyseur comporte au moins une des substances suivantes :
- du lactate de calcium,
- du chlorure de calcium, et
- de l'acide lactique, et facultativement des mélanges dilués dans de l'eau de celles-ci.

4. Procédé selon l'une quelconque des revendications précédentes, comportant une étape de rinçage de la surface de l'extrusion par immersion dans de l'eau ou pulvérisation d'eau.

5. Procédé selon l'une quelconque des revendications précédentes, comportant une étape consistant à compacter l'extrusion via sa surface, par application d'ultrasons.

6. Procédé selon l'une quelconque des revendications précédentes, comportant une étape de pulvérisation superficielle de l'extrusion par exposition à un ou plusieurs écoulements d'air froid.

7. Dispositif pour le conditionnement superficiel d'extrusions comportant un conduit de conditionnement fermé (3) recevant l'extrusion d'aliment (2), ledit conduit de conditionnement fermé (3) étant séparé en un premier tronçon (4), comportant des premiers moyens de traitement superficiel (5), et un second tronçon (6), comportant des seconds moyens de traitement superficiel (7).

8. Dispositif selon la revendication 7, dans lequel le premier tronçon (4) est constitué d'une partie de conduit fermé (3) à l'intérieur de laquelle l'extrusion d'aliment (2) circule avec un jeu minimum entre la surface devant être stabilisée et la paroi du conduit fermé (3).

9. Dispositif selon la revendication 8, dans lequel à l'intérieur du premier tronçon (4), un stabilisateur sous forme de gel est injecté, pour recouvrir uniformément la surface devant être stabilisée, l'injection ayant lieu en vertu desdits premiers moyens de traitement superficiel (5) alimentant ledit premier tronçon (4) en gel à un débit d'écoulement et une pression ajustables.

10. Dispositif selon la revendication 7, dans lequel ledit second tronçon (6) est constitué d'une partie de conduit fermé (3) à l'intérieur de laquelle l'extrusion d'aliment (2) circule avec un jeu remarquable entre la surface devant être stabilisée et la paroi du conduit fermé (3), lesdits seconds moyens de traitement (7) comportent une pluralité de buses (8) positionnées sur ladite paroi dans ledit second tronçon (6), et alimentées en pression avec un catalyseur sous forme liquide.

11. Dispositif selon la revendication 7, comportant un équipement pour le rinçage superficiel de l'extrusion, comportant un bain de rinçage, facultativement muni de moyens d'agitation de bain, ou de moyens de pulvérisation.

12. Dispositif selon la revendication 7, comportant un équipement pour le compactage de l'extrusion à l'aide de moyens ne détériorant pas la surface de l'extrusion nouvellement conditionnée, par exemple par ultrasons.

13. Dispositif selon la revendication 8, comportant un équipement pour le séchage superficiel de l'extrusion, fonctionnant avec un ou plusieurs écoulements forcés d'air froid.
